# EUROPEAN PATENT SPECIFICATION

(11) **EP 3 975 315 B1**
(45) Date of publication and mention of the grant of the patent: **18.03.2026**
(21) Application number: 20791121.5
(22) Date of filing: 16.04.2020
(51) Int. Cl.: H01M 10/613, H01M 10/625, H01M 10/651, H01M 10/653, H01M 10/6556, H01M 10/6568, H01M 10/615, F28F 3/12

(54) **COMBINATION OF A BATTERY AND A HEAT EXCHANGER FOR COOLING VEHICLE BATTERY**
KOMBINATION EINER BATTERIE UND EINES WÄRMETAUSCHERS ZUR KÜHLUNG EINER FAHRZEUGBATTERIE
COMBINAISON D'UNE BATTERIE ET D'UN ÉCHANGEUR DE CHALEUR DE REFROIDISSEMENT DE BATTERIE D'UN VÉHICULE

(30) Priority: 18.04.2019 JP 2019079212
(43) Date of publication of application: 30.03.2022
(73) Proprietor: Valeo Japan Co., Ltd, Kumagaya-shi, Saitama 360-0193 (JP)
(72) Inventor: CASENAVE, Christian, 78320 Le Mesnil Saint Denis (FR); BUSSON, Francois, 78320 Le Mesnil Saint Denis (FR); TAKANO, Akihiko, Kumagaya-shi Saitama 360-0193 (JP); LI, Kun, Shanghai 200233 (CN)
(74) Representative: Valeo Powertrain Systems
(86) International application number: PCT/JP2020/016688
(87) International publication number: WO 2020/213673

(56) References cited:
- EP-A1- 3 418 408
- JP-A- 2005 024 235
- JP-A- 2007 127 306
- JP-A- H10 152 767
- JP-B2- 5 982 102
- US-A1- 2014 158 330

## Description

### Technical Field

The present invention relates to the combination of a battery and a heat exchanger for cooling a vehicle battery.

### Background Art

An electric-powered vehicle or a hybrid vehicle runs by electricity accumulated in a chargeable/dischargeable battery. The battery is cooled for suppressing degradation of the battery due to heat generation at a time of charging the battery. Patent Literature 1 discloses a heat exchanger for cooling a battery by heat exchange with a cooling medium flowing in an internal flow passage.

Patent Literature 2 discloses a heat exchanger which has a clad thin sheet material, a clad thick sheet material that is disposed so as to define a passage between the clad thick sheet material and the clad thin sheet material, and that has a sheet thickness greater than that of the clad thin sheet material, and an inner fin held between the clad materials. The clad thick sheet material and the clad thin sheet material have Zn-containing brazing filler metal layers on their passage sides, respectively, and the post-brazing surface Zn amounts are set so as to satisfy specific conditions. Further, certain conditions concerning the compositions of each of the layers that constitute the clad materials, and the inner fin are set.

It is noted herein that a coolant to which a melting point lowering agent is added for freezing prevention is often used as the cooling medium. Such a coolant exhibits an electrical conducting property. Owing to this, in a case in which the heat exchanger is configured with a metal, then a cell reaction is locally produced within the heat exchanger to further corrode the metal, and it is possibly difficult to ensure water-tightness of the cooling medium flow passage.

### Citation List

### Patent Literature

Patent Literature 1: JP-A-2014-203535
Patent Literature 2: US-A1-2014/0158330

### Summary of the Invention

### Technical Problem

An object of the present invention is to provide a technique capable of ensuring long-term water-tightness of a cooling medium flow passage in a heat exchanger for cooling a vehicle battery.

### Solution to Problem

According to an embodiment of the present invention, which is defined by the appended independent claim, it is provided an aluminum alloy heat exchanger for cooling a vehicle battery by coming in thermal contact with the battery, a cooling medium flow passage being formed within the heat exchanger, wherein at least a part of materials configuring the heat exchanger and forming the cooling medium flow passage includes: an aluminum alloy core material; and an aluminum alloy sacrificial corrosion layer provided on a cooling medium flow passage-side surface of the core material is provided. Advantage of the Invention

According to the embodiment, the sacrificial corrosion layer is preferentially ionized; thus, it is possible to prevent further corrosion of the core material of the aluminum alloy for a long period of time and ensure long-term water-tightness of the cooling medium flow passage.

### Brief Description of the Drawings

[FIG. 1] FIG. 1 is a schematic perspective view of a heat exchanger according to an embodiment of the present invention.
[FIG. 2] FIG. 2 is a schematic cross-sectional view, taken along a line II-II, of the heat exchanger shown in FIG. 1.
[FIG. 3] FIG. 3 is a schematic enlarged cross-sectional view showing an enlarged region III of FIG. 2.

### Description of Embodiments

An embodiment of a heat exchanger for cooling a vehicle battery will be described hereinafter with reference to the accompanying drawings.

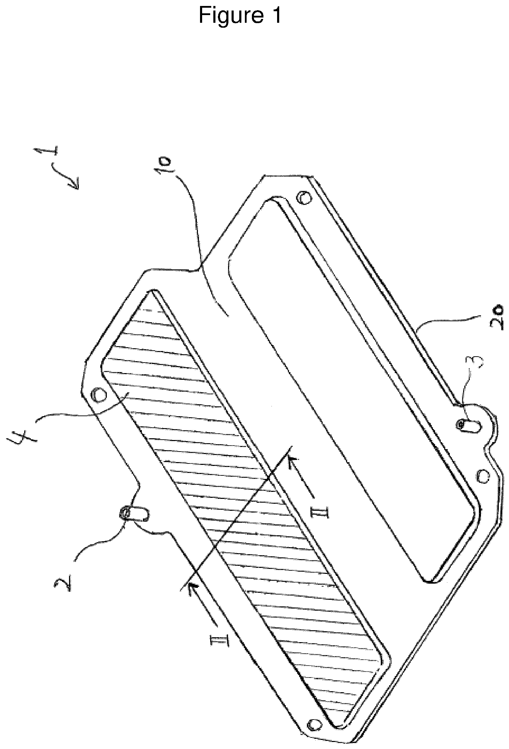

As shown in FIG. 1, a heat exchanger 1 has a cooling medium inlet port 2 and a cooling medium outlet port 3.

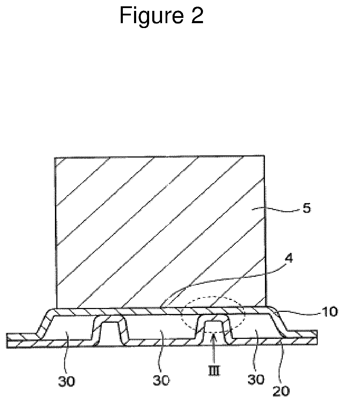

As shown in FIG. 2, the heat exchanger 1 has a first metal plate 10 and a second metal plate 20 that face each other and that are brazed with each other. Appropriate irregularities are formed in each of the first metal plate 10 and the second metal plate 20. Combining the irregularities enables formation of a plurality of cavities 30. The cavities 30 are to serve as a cooling medium flow passage (hereinafter, referred to as "cooling medium flow passage 30"). In FIG. 2, contact surfaces of the first metal plate 10 and the second metal plate 20 are bonded together via a brazing filler metal to be described later.

In general, the heat exchanger 1 is installed in such a manner that the first metal plate 10 is directed upward and the second metal plate 20 is directed downward (however, directions of the first metal plate 10 and the second metal plate 20 are not limited to these directions). As shown in FIGS. 1 and 2, a relatively large-area flat face 4 is formed on an outer surface of the first metal plate 10. As shown in FIG. 2, a battery 5 is placed on the flat face 4. The battery 5 is thermally bonded with the flat face 4 of the first metal plate 10. In FIG. 1, one of two flat faces 4 (on which the battery 5 is placed) is hatched.

Although not shown in detail, the cooling medium flow passage 30 extends to, for example, meander within the heat exchanger 1. A cooling medium flowing in the heat exchanger 1 via the inlet port 2 flows through the cooling medium flow passage 30, and flows away from the heat exchanger 1 via the outlet port 3. In this course, the cooling medium draws heat from the battery 5 via the first metal plate 10 and cools the battery 5. It is thereby possible to prevent overheating of the battery 5 that generates heat during charging.

It is noted that the heat exchanger 1 is provided in a circulating line, which is not shown and in which a cooling heat exchanger and a pump, which are not shown, are provided. The heat exchanger 1 is connected to the circulating line via the inlet port 2 and the outlet port 3. The cooling medium flowing away from the heat exchanger 1 via the outlet port 3 to the circulating line flows in the cooling heat exchanger, flows away from the cooling heat exchanger to the circulating line after being cooled by the cooling heat exchanger, and flows in the heat exchanger 1 via the inlet port 2. The pump forms such a circulating flow of the cooling medium.

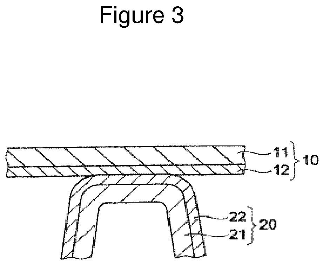

As shown in FIG. 3, the first metal plate 10 has an aluminum alloy core material 11, and an aluminum alloy brazing filler metal layer (skin material) 12 provided on a surface, which faces the second metal plate 20, of this core material 11. The core material 11 and the brazing filler metal layer 12 are bonded with each other by cladding (rolling bonding).

The second metal plate 20 has an aluminum alloy core material 21, and an aluminum alloy sacrificial corrosion layer 22 provided on a surface, which faces the first metal plate, of the core material. The core material 21 and the sacrificial corrosion layer 22 are bonded with each other by cladding (rolling bonding) .

It is noted that FIG. 3 schematically shows a state just before brazing, and diffusion occurs between the adjacent layers after the brazing.

As the core materials (core) 11 and 21, a brazing filler metal (skin material) configuring the brazing filler metal layer 12, and a sacrificial anode material configuring the sacrificial corrosion layer 22, materials specified in, for example, Japan Industrial Standards JIS 3263:2002 "Aluminum alloy brazing filler metals and brazing sheets" can be selected and used as appropriate. The sacrificial anode material has a lower corrosion potential by adding Zn.

Examples of a combination of materials to be used include a combination of an aluminum alloy of Alloy number 3003 in JIS Standards as the material of the core materials 11 and 21, an aluminum alloy of Alloy number 4343 or 4045 in JIS Standards as the material of the brazing filler metal layer 12, and an aluminum alloy of Alloy number 7072 in JIS Standards as the material of the sacrificial corrosion layer 22. A combination of the other materials can be used.

Chemical compositions of the exemplified alloys will be described below. Numerical values indicating the chemical components are all in wt%.

Chemical compositions of 3003 alloy include: Si ≤ 0.6; Fe ≤ 0.7; 0.05 ≤ Cu ≤ 0.20; 1.0 ≤ Mn ≤1.5; Zn ≤ 0.10; remainder elements each being equal to or lower than 0.05; remainder elements total being equal to or lower than 0.15; and the balance being Al.

Chemical compositions of 4343 alloy include: 6.8 ≤ Si ≤ 8.2; Fe ≤ 0.8; Cu ≤ 0.25; Mn ≤ 0.10; Zn ≤ 0.20; remainder elements each being equal to or lower than 0.05; remainder elements total being equal to or lower than 0.15; and the balance being Al. Chemical components of 4045 alloy include: 9.0 ≤ Si ≤ 11.0; Fe ≤ 0.8; Cu ≤ 0.30; Mn ≤ 0.05; Mg ≤ 0.05; Zn ≤ 0.10; Ti ≤ 0.20; remainder elements each being equal to or lower than 0.50; remainder elements total being equal to or lower than 0.05; and the balance being Al.

Chemical compositions of 7072 alloy include: Si+Fe ≤ 0.7; Cu ≤ 0.10; Mn ≤ 0.10; Mg ≤ 0.10; 0.8 ≤ Zn ≤ 1.3; remainder elements each being equal to or lower than 0.05; remainder elements total being equal to or lower than 0.15; and the balance being Al.

A coolant contains, for example, water, glycol (for example, ethylene glycol), and a melting point lowering agent. The coolant exhibits electrical conductivity. In a case of using such a coolant as the cooling medium, then a cell reaction is produced between the cooling medium and a metal facing the cooling medium flow passage 30 to often corrode the metal. However, in the embodiment, the sacrificial corrosion layer 22 is provided on the surface, which faces the cooling medium flow passage 30, of the second metal plate 20; thus, corrosion caused by the cell reaction preferentially occurs in the sacrificial corrosion layer 22. Owing to this, it is possible to prevent corrosion of the core material 21 of the second metal plate 20 and corrosion of the first metal plate 10 for a long period of time.

A corrosion potential V₂₂ (also referred to as "second corrosion potential") of the sacrificial corrosion layer 22 of the second metal plate 20 is preferably higher than -850 mV. In addition, the corrosion potential V22 is preferably lower than a corrosion potential V₂₁ (also referred to as "first corrosion potential") of the core material 21 of the second metal plate 20 by 50 mV to 150 mV (that is, "V₂₁-V₂₂" is preferably in a range from +50 mV to +150 mV). The example of the combination of the materials described above satisfy these conditions.

The corrosion potential in the present specification means a potential measured by a method specified in ASTM G69-12 (Standard Test Method for Measurement of Corrosion Potentials of Aluminum Alloys). Since only one type of composition of an electrolyte for use in measuring potentials is specified in ASTM G69-12, this electrolyte is used. Furthermore, while a plurality of types of electrodes for use in measuring potentials are known, a saturated calomel electrode specified in ASTM G69-12 is selected and used.

When "V₂₁-V₂₂" is lower than +50 mV, it is difficult to obtain a sufficient corrosion prevention effect. On the other hand, when "V₂₁-V₂₂" is higher than +150 mV, then the sacrificial corrosion layer 22 has an excessively high corrosion rate, and it is difficult to maintain the corrosion prevention effect for a long period of time. Likewise, in a case in which the corrosion potential V₂₂ is lower than -850 mV, then the sacrificial corrosion layer 22 has an excessively high corrosion rate, and it is difficult to maintain the corrosion prevention effect for a long period of time.

Moreover, the aluminum alloy of Alloy number 3003 configuring the core material 11 of the first metal plate 10 is an Al-Mn-based alloy (which respect similarly applies to other 3000 series aluminum alloys). The aluminum alloy of Alloy number 4343 or 4045 configuring the brazing filler metal layer 12 of the first metal plate 10 is an Al-Si-based alloy (which respect similarly applies to other 4000 series aluminum alloys). In a course of a brazing process, the brazing filler metal layer 12 is melted and Si contained in the brazing filler metal layer 12 diffuses into the core material 11.

This diffusing Si is bonded with Al and Mn contained in the core material 11 and a layer called brown-band is formed within the core material 11. The brown-band is also called BDP (band of dense precipitation) and fine α-Al(Fe,Mn)Si particles are precipitated in the brown-band. Mn contained in a matrix within the brown-band is depleted to accompany generation of this precipitate, and the corrosion potential is made lower than that of the original alloy (material of the core material 11). Therefore, the brown-band functions as a sacrificial corrosion layer and prevents the core material 11 of the first metal plate 10 from being further corroded.

It is noted that a sacrificial anode effect of the brown-band of the first metal plate 10 is lower than a sacrificial anode effect of the sacrificial corrosion layer 22 of the second metal plate 20; thus, a thickness reduction rate of the second metal plate 20 due to corrosion is higher than a thickness reduction rate of the first metal plate 10. Owing to this, if holes are formed by the corrosion, the holes are formed in the second metal plate 20. In the embodiment described above, the battery 5 is connected to the first metal plate 10 and the second metal plate 20 is located apart from the battery 5; thus, it is possible to reduce a probability of occurrence of a trouble such as an electrical short-circuit of the battery 5 even if leakage of the cooling medium due to the holes formed by the corrosion occurs.

As described so far, according to the embodiment, it is possible to provide the cooling heat exchanger exhibiting a high corrosion resistance and capable of ensuring long-term water-tightness of the cooling medium flow passage 6.

### Reference Signs List

- 1:: Heat exchanger
- 5:: Battery
- 10:: First metal plate
- 11:: Core material
- 12:: Brazing filler metal layer
- 20:: Second metal plate
- 21:: Core material
- 22:: Sacrificial corrosion layer
- 30:: Cooling medium flow passage

## Claims

1. A combination of a battery and an aluminum alloy heat exchanger (1) for cooling a vehicle battery (5) by coming in thermal contact with the battery, a cooling medium flow passage (30) being formed within the heat exchanger, wherein at least a part (20) of materials (10, 20) configuring the heat exchanger and forming the cooling medium flow passage (30) includes: an aluminum alloy core material (21); and
an aluminum alloy sacrificial corrosion layer (22) provided on a cooling medium flow passage-side surface of the core material and in the heat exchanger comprises, as the materials configuring the heat exchanger, a first metal plate (10); and a second metal plate (20) brazed with each other, cavities to serve as the cooling medium flow passage (30) are formed between the first metal plate and the second metal plate, the first metal plate (10) includes: an aluminum alloy core material (11); and an aluminum alloy brazing filler metal layer (12) provided on a surface, which faces the second metal plate, of the core material, and the second metal plate (20) includes: the aluminum alloy core material (21); and the aluminum alloy sacrificial corrosion layer (22) provided on the surface, which faces the first metal plate, of the core material, wherein the battery (5) is installed on the first metal plate (10).

2. The combination according to claim 1, wherein the core material (21) of the second metal plate (20) has a first corrosion potential, the sacrificial corrosion layer (22) of the second metal plate (20) has a second corrosion potential, the second corrosion potential is higher than - 850 mV, and the second corrosion potential is lower than the first corrosion potential by 50 mV to 150 mV.

## Patentansprüche

1. Eine Kombination aus einer Batterie und einem Aluminiumlegierungs-Wärmetauscher (1) zum Kühlen einer Fahrzeugbatterie (5) durch thermischen Kontakt mit der Batterie, wobei ein Kühlmitteldurchgang (30) innerhalb des Wärmetauschers gebildet ist, wobei mindestens ein Teil (20) der Materialien (10, 20), die den Wärmetauscher konfigurieren und den Kühlmitteldurchgang (30) bilden, umfasst: ein Aluminiumlegierungs-Kernmaterial (21); und eine Aluminiumlegierungs-Opferkorrosionsschicht (22), die auf einer Kühlmitteldurchgangsseiten-Oberfläche des Kernmaterials vorgesehen ist, und wobei der Wärmetauscher als Materialien, die den Wärmetauscher konfigurieren, umfasst: eine erste Metallplatte (10); und eine zweite Metallplatte (20), die miteinander verlötet sind, wobei Hohlräume, die als Kühlmitteldurchgang (30) dienen, zwischen der ersten Metallplatte und der zweiten Metallplatte gebildet sind, wobei die erste Metallplatte (10) umfasst: ein Aluminiumlegierungs-Kernmaterial (11); und eine Aluminiumlegierungs-Hartlotschicht (12), die auf einer Oberfläche des Kernmaterials vorgesehen ist, die der zweiten Metallplatte zugewandt ist, und wobei die zweite Metallplatte (20) umfasst: das Aluminiumlegierungs-Kernmaterial (21); und die Aluminiumlegierungs-Opferkorrosionsschicht (22), die auf der Oberfläche des Kernmaterials vorgesehen ist, die der ersten Metallplatte zugewandt ist, wobei die Batterie (5) auf der ersten Metallplatte (10) installiert ist.

2. Die Kombination nach Anspruch 1, wobei das Kernmaterial (21) der zweiten Metallplatte (20) ein erstes Korrosionspotential aufweist, die Opferkorrosionsschicht (22) der zweiten Metallplatte (20) ein zweites Korrosionspotential aufweist, das zweite Korrosionspotential höher als -850 mV ist und das zweite Korrosionspotential um 50 mV bis 150 mV niedriger als das erste Korrosionspotential ist.

## Revendications

1. Une combinaison d'une batterie et d'un échangeur de chaleur en alliage d'aluminium (1) pour refroidir une batterie de véhicule (5) en entrant en contact thermique avec la batterie, un passage d'écoulement de milieu de refroidissement (30) étant formé à l'intérieur de l'échangeur de chaleur, dans laquelle au moins une partie (20) des matériaux (10, 20) configurant l'échangeur de chaleur et formant le passage d'écoulement de milieu de refroidissement (30) comprend : un matériau de base en alliage d'aluminium (21) ; et une couche de corrosion sacrificielle en alliage d'aluminium (22) prévue sur une surface côté passage d'écoulement de milieu de refroidissement du matériau de base et dans l'échangeur de chaleur comprend, comme matériaux configurant l'échangeur de chaleur, une première plaque métallique (10) ; et une deuxième plaque métallique (20) brasées l'une avec l'autre, des cavités servant de passage d'écoulement de milieu de refroidissement (30) sont formées entre la première plaque métallique et la deuxième plaque métallique, la première plaque métallique (10) comprend : un matériau de base en alliage d'aluminium (11) ; et une couche de métal d'apport de brasage en alliage d'aluminium (12) prévue sur une surface, qui fait face à la deuxième plaque métallique, du matériau de base, et la deuxième plaque métallique (20) comprend : le matériau de base en alliage d'aluminium (21) ; et la couche de corrosion sacrificielle en alliage d'aluminium (22) prévue sur la surface, qui fait face à la première plaque métallique, du matériau de base, dans laquelle la batterie (5) est installée sur la première plaque métallique (10).

2. La combinaison selon la revendication 1, dans laquelle le matériau de base (21) de la deuxième plaque métallique (20) a un premier potentiel de corrosion, la couche de corrosion sacrificielle (22) de la deuxième plaque métallique (20) a un second potentiel de corrosion, le second potentiel de corrosion est supérieur à -850 mV, et le second potentiel de corrosion est inférieur au premier potentiel de corrosion de 50 mV à 150 mV.
